# EUROPÄISCHE PATENTSCHRIFT

(11) **EP 0 922 241 B1**
(45) Veröffentlichungstag und Bekanntmachung des Hinweises auf die Patenterteilung: **28.06.2000**
(21) Anmeldenummer: 97942790.3
(22) Anmeldetag: 28.08.1997
(51) Int. Cl.: G02B 6/42

(54) **ELEKTROOPTISCHES MODUL**
ELECTROOPTICAL MODULE
MODULE ELECTRO-OPTIQUE

(30) Priorität: 28.08.1996 DE 19636238; 27.09.1996 DE 19641393
(43) Veröffentlichungstag der Anmeldung: 16.06.1999
(73) Patentinhaber: SIEMENS AKTIENGESELLSCHAFT, 80333 München (DE)
(72) Erfinder: GRUMM, Mathias, D-12679 Berlin (DE); HANKE, Bernd, D-14109 Berlin (DE); MEYER-GÜLDNER, Frank, D-12347 Berlin (DE); OELZE, Oliver, D-12435 Berlin (DE); STEFFENSEN, Andreas, D-13161 Berlin (DE); SCHULZE, Joachim, D-12163 Berlin (DE)
(86) Internationale Anmeldenummer: DE9701955
(87) Internationale Veröffentlichungsnummer: WO9809188

(56) Entgegenhaltungen:
- WO-A-94/04955
- WO-A-94/19718
- DE-A- 3 138 197

## Beschreibung

Die Erfindung liegt auf dem Gebiet der optischen Kopplung eines elektrooptischen Senders oder eines optoelektronischen Empfängers - nachfolgend auch als elektrooptischer Wandler oder elektrooptisches Bauteil bezeichnet - mit einem Kopplungspartner (z. B. einem Lichtwellenleiterende). Die Erfindung betrifft ein elektrooptisches Modul, das frontseitig eine Kopplungsbuchse zur Aufnahme eines Lichtwellenleiterendes und rückwärtig einen Aufnahmebereich für ein elektrooptisches Bauteil aufweist, wobei das Bauteil mittels Klebstoff fixiert ist, der in einen sich senkrecht zur Längsachse der Kopplungsbuchse erstreckenden Fügespalt zwischen dem Aufnahmebereich und dem elektrooptischen Bauteil und/oder einem Bauteilträger eingebracht ist.

Ein derartiges aus der DE 31 38 197 A1 bekanntes Modul umfaßt ein Kopplungsteil mit einer Kopplungsbuchse, in die eine Kapillare mit einem zentral in Richtung der Kapillarenlängsachse verlaufenden Lichtwellenleiterende zur optischen Kopplung mit einem elektrooptischen Bauteil einführbar ist. Auf der der Buchse gegenüberliegenden Seite ist ein Aufnahmebereich für ein elektrooptisches Bauteil vorgesehen, dessen Gehäuse mittels Klebstoff an dieser Seite fixiert ist. Der Klebstoff befindet sich dabei in einem Fügespalt, der sich senkrecht zur Längsachse der Kopplungsbuchse erstreckt. Die Stabilität dieser Klebstoffverbindung ist gegenüber mechanischen und thermischen Zug- oder Scherbelastungen vergleichsweise gering, was sich nachteilig auf den Kopplungswirkungsgrad auswirken kann.

Ein weiteres Beispiel für ein Modul ist aus WO 94/04 955 A bekannt.

Die Aufgabe der Erfindung besteht in der Schaffung eines elektrooptischen Moduls, bei dem ein langzeitstabiler und von Änderungen der äußeren Bedingungen weitestgehend unabhängiger hoher Kopplungswirkungsgrad gewährleistet ist.

Diese Aufgabe wird erfindungsgemäß bei einem Modul der eingangs genannten Art durch die Merkmale des Anspruchs 1 gelöst.

Ein wesentlicher Vorteil des erfindungsgemäßen Moduls besteht in seiner erhöhten Stabilität insbesondere gegenüber thermischen Wechselbeanspruchungen, weil die Verbindung zwischen Bauteil bzw. Bauteilträger und Aufnahmebereich durch den Klebstoffformschluß in den Ausnehmungen verstärkt wird. Mechanische oder thermische Beanspruchungen können daher nicht so leicht zu einer Abweichung von der ursprünglichen optimalen Bauteilposition führen. Ein weiterer Vorteil des erfindungsgemäßen Moduls besteht in der vergleichsweise einfachen Applikation und der der Klebstoffaushärtung förderlichen Zugänglichkeit des Klebstoffs in den Ausnehmungen. Dieser kann nämlich vorteilhafterweise in einem einzigen Arbeitsvorgang flächig auf die senkrecht zur Längsachse der Kopplungsbuchse bzw. zur optischen Achse stehende Fläche des Aufnahmebereichs appliziert werden und tritt anschließend in die Ausnehmungen ein.

Um einen Ausgleich für den bei der Justage möglicherweise entstehenden exzentrischen Versatz zwischen dem elektrooptischen Bauteil oder seinem Bauteilträger und dem Aufnahmebereich auszugleichen und weiterhin eine Kommunikation der Ausnehmungen zu erlauben, weisen nach einer vorteilhaften Fortbildung der Erfindung die Ausnehmung des elektrooptischen Bauteils und/oder des Bauteilträgers einerseits und die Ausnehmung des Aufnahmebereichs andererseits fügespaltseitig unterschiedlich Weiten auf.

Eine herstellungstechnisch und mechanisch bevorzugte Weiterbildung der Erfindung besteht darin, daß das Bauteil von einem ringförmigen Bauteilträger aufgenommen ist, der unter Bildung des Fügespalts einem Flansch des Aufnahmebereichs gegenüberliegend angeordnet ist.

Fertigungstechnisch bevorzugt wird ein Klebstoff eingesetzt, der sowohl lichtaushärtbar als auch wärmeaushärtbar ist. Dazu haben sich als besonders geeignet die in der deutschen Patentanmeldung 195 45 552 vom 06.12.1995 und die in der EP 0 504 569 A2 offenbarten Kompositionen sowie der unter dem Handelsnamen DELO-DUOKAT® VE 293 der Fa. DELO Industrieklebstoffe GmbH & Co. KG, Ohmstr. 3, 86899 Landsberg vertriebene Zweikomponenten-Klebstoff erwiesen. Vorteilhafterweise können die Ausnehmungen einen zusätzlichen Lichtzutritt zur Lichtaushärtung des Klebstoffs ermöglichen.

Um dem elektrooptischen Modul eine mechanisch besonders feste Verbindung des elektrooptischen Bauteils mit der Kopplungsbuchse bzw. deren Aufnahmebereich zu verleihen, ist nach einer bevorzugten Ausgestaltung der Erfindung vorgesehen, daß an den Fügespalt mindestens ein parallel zur Längsachse der Kopplungsbuchse ausgerichteter Klebespalt zwischen mindestens einem Ansatz und mindestens einer Ausnehmung von Aufnahmebereich der Kopplungsbuchse und elektrooptischem Bauteil mit einer Spaltbreite angrenzt, die eine Ausrichtung des elektrooptischen Bauteils in eine Position maximaler optischer Kopplung zuläßt.

Bei dem erfindungsgemäßen Modul kann der mindestens eine Ansatz an dem Aufnahmebereich der Kopplungsbuchse oder an dem elektrooptischen Bauteil und die mindestens eine Ausnehmung dementsprechend an dem elektrooptischen Bauteil oder an dem Aufnahmebereich vorgesehen sein. Auch kann jeweils mehr als ein Ansatz bzw. mehr als eine Ausnehmung vorgesehen sein, wenn dies die konstruktiven und optischen Anforderungen an das elektrooptische Modul zulassen.

Als besonders vorteilhaft wird es angesehen, wenn der Aufnahmebereich der Kopplungsbuchse an seinem äußeren Rande mit mehreren Ansätzen in Form von Zapfen versehen ist und das elektrooptische Bauteil an seinem äußeren Rande mit im montierten Zustand mit den Zapfen fluchtenden Ausnehmungen ausgestattet ist.

Dadurch sind nämlich relativ große Bereiche der Klebespalte dem Licht aussetzbar, was der Vorfixierung des verwendeten Klebstoffs durch Lichtaushärtung förderlich ist.

Die Erfindung wird nachfolgend anhand figürlich dargestellter Ausführungsbeispiele weiter erläutert; es zeigen:
- Figur 1: ein erstes erfindungsgemäßes Modul,
- Figur 2: eine Draufsicht auf ein weiteres erfindungsgemäßes Modul,
- Figur 3: einen Schnitt durch das Modul nach Figur 2 entlang der Linie II-II,
- Figur 4: eine Seitenansicht des Moduls nach Figur 2,
- Figur 5: eine perspektivische Ansicht Moduls und
- Figur 6: eine Sprengzeichnung des Moduls nach Figur 5.

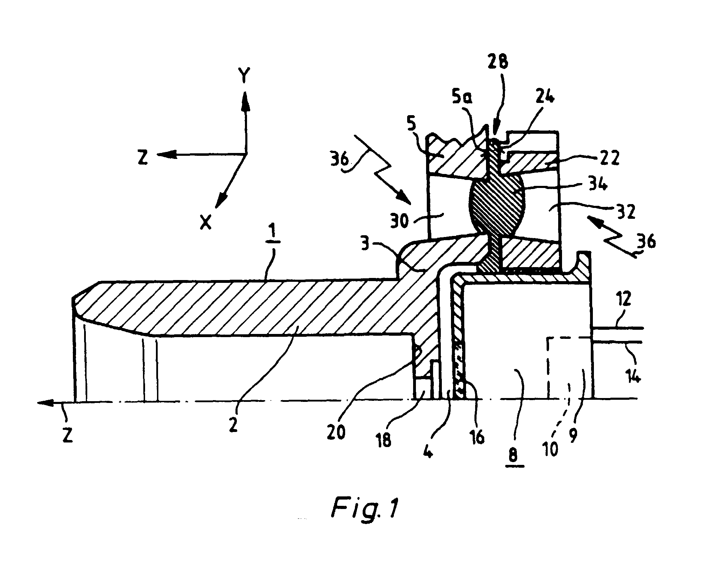

Figur 1 zeigt im teilweisen Längsschnitt ein erstes erfindungsgemäßes elektrooptisches Modul mit einem Kopplungsteil 1, das im vorderen Bereich (frontseitig) eine Kopplungsbuchse 2 zur Aufnahme eines nicht dargestellten Lichtwellenleiterendes oder eines Steckerstiftes mit einem zentral verlaufenden Lichtwellenleiterende aufweist. Das Kopplungsteil weist rückwärtig einen Aufnahmebereich 3 auf, der eine Vertiefung 4 und einen radialen Flansch 5 zur Aufnahme bzw. Fixierung eines elektrooptischen Bauteils 8 umfaßt. Das Bauteil 8 weist ein Gehäuse 9 zur Aufnahme eines andeutungsweise in Form einer Laserdiode 10 gezeigten elektrooptischen Bauteils auf, das über elektrische Anschlüsse 12, 14 zur Abgabe von Lichtsignalen ansteuerbar ist. Die Lichtsignale können über eine Linse oder ein Fenster 16 durch eine Bohrung 18 eines Anschlags 20 für den Lichtwellenleitersteckerstift in das von diesem aufgenommene Lichtwellenleiterende eintreten. Das Bauteil 8 bzw. dessen Gehäuse 9 ist von einem Bauteilträger in Form eines scheibenförmigen Ringes 22 umgeben, dessen eine Oberfläche 24 einer korrespondierenden Oberfläche 5a des Flansches 5 unter Bildung eines Fügespaltes 28 beabstandet zugewandt ist. Der Ring 22 und der Flansch 5 enthalten vorzugsweise jeweils mehrere am Umfang verteilte konische Öffnungen 30, 32, die im wesentlichen fluchten und die sich zum Fügespalt 28 hin verjüngen. Die Öffnungen 30, 32 haben unterschiedliche Weiten W1, W2, so daß sie auch bei einem bei der nachfolgenden Justage eingestellten exzentrischen Versatz weiterhin kommunizieren. Der Fügespalt 28 erstreckt sich in einer Ebene X-Y, die senkrecht zur optischen Achse oder zur Längsachse Z der Kopplungsbuchse 2 orientiert ist.

Zur Montage und zur aktiven Justage des Moduls wird in die Kopplungsbuchse 2 ein Referenzsteckerstift eingeführt, der ein erstes Ende eines Lichtwellenleiters koaxial umgibt. Das andere Ende des Lichtwellenleiters ist mit einem optischen Empfänger zur Ermittlung der Intensität der in das erste Lichtwellenleiterende eingekoppelten optischen Signale verbunden. Auf die Oberfläche 5a des Flansches 5 wird eine Schicht eines sowohl lichtaushärtbaren als auch wärmeaushärtbare Klebstoffs 34 aufgebracht. Anschließend wird das Bauteil 8 soweit in die Vertiefung 4 eingeführt, daß der Bauteilträger 22 mit seiner Oberseite 24 den klebstoffgefüllten Fügespalt 28 begrenzt. Geringe Mengen des Klebstoffs treten dabei von dem Fügespalt 28 aus in die Öffnungen 30, 32 ein. Bei der anschließenden aktiven Justage wird die Laserdiode 10 über die Anschlüsse 12, 14 mit elektrischen Signalen beaufschlagt und sendet demgemäß Lichtsignale aus. Die Lichtsignale werden über das Fenster 16 und die Bohrung 18 in das nichtdargestellte Lichtwellenleiterende eingekoppelt. Unter Auswertung der Intensität des eingekoppelten Lichtes wird das Bauteil 8 solange in der X-Y-Ebene und in Z-Richtung bewegt, bis eine Position maximaler Intensität (optimaler Kopplungswirkungsgrad) erreicht ist. In dieser Position wird der Klebstoff 34 wie durch Pfeile 36 angedeutet zur Aushärtung mit UV-Licht bestrahlt, das zusätzlich auch durch die Öffnungen 30, 32 zum Fügespalt 28 gelangt. Anschließend wird der Klebstoff 34 einer Wärmeaushärtung unterzogen, die vorteilhafterweise durch die zuvor erfolgte Anhärtung mittels Lichtbestrahlung in einer separaten Vorrichtung erfolgen kann, und dabei vollständig ausgehärtet.

Nach vollständiger Aushärtung besteht die Verbindung zwischen Bauteilträger 22 und Flansch 5 im wesentlichen über den senkrecht zur Z-Achse orientierten Fügespalt 28. Die Verbindung ist zusätzlich durch den Formschluß des Klebstoffs in den Öffnungen 30, 32 verstärkt. Der Fügespalt und damit die Klebstoff Verteilung weisen radial keine signifikanten Materialasymmetrien auf, so daß insbesondere bei thermischen Beanspruchungen eine weitestgehend symmetrische und damit die Kopplungsverhältnisse nicht beeinträchtigende Belastung in dem erfindungsgemäßen Modul vorherrscht. Das erfindungsgemäße Modul zeichnet sich dadurch neben einer vergleichsweise einfachen Klebstoffapplikation und einer dadurch vereinfachten Herstellbarkeit durch eine langzeitstabile und von Temperaturwechseln unbeeinträchtigte Kopplungscharakteristik aus.

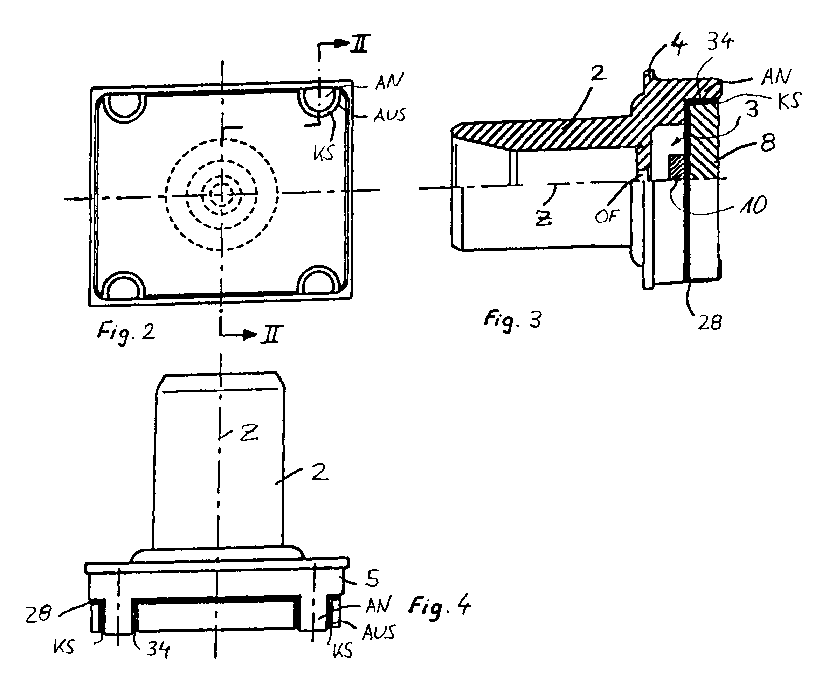

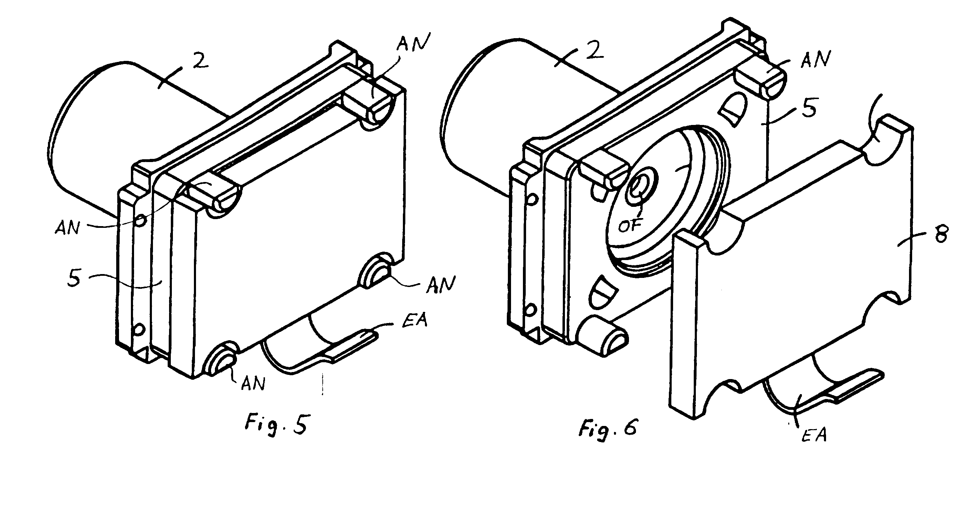

Wie insbesondere die Figuren 2 bis 4 zeigen, umfaßt auch eine zweite Ausführungsform eines erfindungsgemäßen Moduls eine Kopplungsbuchse 2 zur Aufnahme eines nicht näher dargestellten Lichtwellenleitersteckers, in dessen zentraler Bohrung in üblicher Weise ein Ende eines Lichtwellenleiters angeordnet ist. Die Kopplungsbuchse 2 ist einstückig mit einem rückwärtigen Aufnahmebereich 3 versehen, der zur Aufnahme eines elektrooptischen Bauteils 8 dient. Der Aufnahmebereich 3 ist mit einem sich radial nach außen erstreckenden Flansch 5 versehen, wie dies auch die Figuren 5 und 6 zeigen.

Das elektrooptische Bauteil 8 ist im dargestellten Beispiel scheibenförmig ausgebildet und weist einen optischen Sender 10 (siehe Fig. 3) auf, der als Laserdiode ausgebildet sein kann. Der optische Sender ist über elektrische Anschlüsse EA (vgl. Figuren 5 und 6) ansteuerbar. Der optische Sender gibt dann Lichtsignale ab, die über eine ggf. eine Linse enthaltende Öffnung OF in dem Aufnahmebereich 3 in das Ende des nicht dargestellten Lichtwellenleiters einkoppelbar sind.

Zusätzlich zu dem in Zusammenhang mit Figur 1 ausführlich beschriebenen Fügespalt 28 sind bei dem elektrooptischen Modul nach den Figuren 2 bis 6 am Rande des Flansches 5 der Kopplungsbuchse 2 vier Zapfen AN vorgesehen, die sich parallel zur Längsachse Z der Kopplungsbuchse 2 erstrecken. Diese Zapfen greifen im montierten Zustand - wie insbesondere die Figuren 4 und 5 zeigen - in Ausnehmungen AUS am Rande des elektrooptischen Bauteils 8 ein. Dabei sind die Zapfen AN im Hinblick auf die Ausnehmungen AUS so bemessen, daß sich jeweils ein Klebespalt KS ergibt, der in seiner Breite so gewählt ist, daß er bei der Montage des elektrooptischen Moduls ein Ausrichten in eine Position maximaler optischer Kopplung zuläßt.

Bei der Herstellung des erfindungsgemäßen elektrooptischen Moduls wird nicht nur der Fügespalt 28 mit einem sowohl lichtaushärtbaren als auch wärmeaushärtbaren Klebstoff 34 versehen, sondern auch der jeweilige Klebespalt KS. Aufgrund versehen, sondern auch der jeweilige Klebespalt KS. Aufgrund der Verwendung eines solchen Klebstoffes läßt sich eine Vorfixierung durch Lichtaushärtung nach Ausrichtung der Kopplungsbuchse 1 in bezug auf das elektrooptische Bauteil 8 nicht nur im Bereich des Fügespaltes 28, sondern auch im Bereich des Klebespaltes KS vornehmen, weil zu diesem Klebespalt KS das Licht einen guten Zutritt hat. Anschließend erfolgt eine Wärmeaushärtung, so daß dann das elektrooptische Modul mit seiner Kopplungsbuchse und mit dem elektrooptischen Bauteil 3 dauerhaft und mechanisch sehr fest zusammengefügt ist.

## Patentansprüche

1. Elektrooptisches Modul, mit einem Modulkörper, der frontseitig eine Kopplungsbuchse (2) zur Aufnahme eines Lichtwellenleiterendes und rückwärtig einen Aufnahmebereich (3) mit einem elektrooptischen Bauteil (8) oder mit einem Bauteilträger aufweist, wobei das Bauteil (8) mittels Klebstoff (34) fixiert ist, der in einen sich senkrecht zur Längsachse (Z) der Kopplungsbuchse (2) erstreckenden Fügespalt (28) zwischen dem Aufnahmebereich (3) und dem elektrooptischen Bauteil (8) und/oder einem Bauteilträger (22) eingebracht ist,
**dadurch gekennzeichnet, daß** das elektrooptische Bauteil (8) und/oder der Bauteilträger (22) und/oder der Aufnahmebereich (3) mit zum Fügespalt (28) führenden Ausnehmungen (30, 32) versehen ist, die sich zum Fügespalt (28) hin verjüngen und in die Klebstoff (34) eingebracht ist.

2. Elektrooptisches Modul nach Anspruch 1,
**dadurch gekennzeichnet, daß** die Ausnehmung (30) des Bauteils (8) und/oder des Bauteilträgers (22) einerseits und die Ausnehmung (32) des Aufnahmebereichs andererseits fügespaltseitig unterschiedliche Weiten (W1, W2) aufweisen.

3. Elektrooptisches Modul nach Anspruch 1 oder 2,
**dadurch gekennzeichnet, daß** das Bauteil (8) von einem ringförmigen Bauteilträger (22) aufgenommen ist, der unter Bildung des Fügespalts (28) einem Flansch (5) des Aufnahmebereichs (3) gebenüberliegend angeordnet ist.

4. Elektrooptisches Modul nach einem der vorangehenden Ansprüche,
**dadurch gekennzeichnet, daß** an den Fügespalt (28) mindestens ein parallel zur Längsachse (Z) der Kopplungsbuchse (2) ausgerichteter Klebespalt (KS) zwischen mindestens einem Ansatz (AN) und mindestens einer Ausnehmung (AUS) von Aufnahmebereich (3) der Kopplungsbuchse (2) und elektrooptischem Bauteil (8) mit einer Spaltbreite angrenzt, die eine Ausrichtung des elektrooptischen Bauteils (8) in eine Position maximaler optischer Kopplung zuläßt.

5. Elektrooptisches Modul nach Anspruch 4,
**dadurch gekennzeichnet**, daß der Aufnahmebereich (3) der Kopplungsbuchse (2) an seinem äußeren Rande mit mehreren Ansätzen in Form von Zapfen (AN) versehen ist und das elektrooptische Bauteil (8) an seinem äußeren Rande mit im montierten Zustand mit den Zapfen (AN) fluchtenden Ausnehmungen (AUS) ausgestattet ist.

## Claims

1. Electrooptical module having a module body which has, on the front side, a coupling bushing (2) for receiving an optical waveguide end and, on the rear side, a receiving region (3) with an electrooptical component (8) or with a component carrier, wherein the component (8) is fixed by means of adhesive (34) which is placed in a joining gap (28) between the receiving region (3) and the electrooptical component (8) and/or a component carrier (22), which joining gap extends at right angles to the longitudinal axis (Z) of the coupling bushing (2), characterised in that the electrooptical component (8) and/or the component carrier (22) and/or the receiving region (3) is provided with recesses (30, 32) leading to the joining gap (28), which recesses taper towards the joining gap (28) and in which recesses the adhesive (34) is placed.

2. Electrooptical module according to claim 1, characterised in that the recess (30) of the component (8) and/or of the component carrier (22) on the one hand and the recess (32) of the receiving region on the other hand have different widths (W1, W2) on the joining gap side.

3. Electrooptical module according to claim 1 or 2, characterised in that the component (8) is received by an annular component carrier (22), which is arranged opposite a flange (5) of the receiving region (3), forming the joining gap (28).

4. Electrooptical module according to one of the preceding claims, characterised in that adjoining the joining gap (28) is at least one adhesive gap (KS) between at least one projection (AN) and at least one recess (AUS) of the receiving region (3) of the coupling bushing (2) and the electrooptical component (8), which adhesive gap is aligned in parallel with the longitudinal axis (Z) of the coupling bushing (2) and has a gap width which allows an alignment of the electrooptical component (8) in a position of maximum optical coupling.

5. Electrooptical module according to claim 4, characterised in that the receiving region (3) of the coupling bushing (2) is provided, on its outer edge, with a plurality of projections in the form of pegs (AN) and the electrooptical component (8) is provided, on its outer edge, with recesses (AUS) which are in alignment with the pegs (AN) in the mounted state.

## Revendications

1. Module électro-optique, comportant un élément de module qui comporte côté frontal une douille (2) de couplage pour la réception d'une extrémité de guide d'onde lumineuse et, côté arrière, une zone de réception comportant un composant (8) électro-optique ou un porte-composant, le composant (8) étant immobilisé au moyen de colle (34) qui est introduite dans une fente (28) de jointure, s'étendant perpendiculairement à l'axe (Z) longitudinal de la douille (2) de couplage, entre la zone (3) de réception et le composant (8) électro-optique et/ou un porte-composant (22), caractérisé en ce que le composant (8) électro-optique et/ou le porte-composant (22) et/ou la zone (3) de réception sont munis d'évidements (30, 32) qui vont à la fente (28) de jointure, qui se rétrécissent en direction de la fente (28) de jointure et dans lesquels de la colle (34) est introduite.

2. Module électro-optique suivant la revendication 1, caractérisé en ce que l'évidement (30) du composant (8) et/ou du porte-composant (22), d'une part, et l'évidement (32) de la zone de réception, d'autre part, ont des largeurs (W1, W2) différentes du côté de la fente de jointure.

3. Module électro-optique suivant la revendication 1 ou 2, caractérisé en ce que le composant (8) est reçu par un porte-composant (22) annulaire qui est monté en face d'un flasque (5) de la zone (3) de réception, avec formation de la fente (28) de jointure.

4. Module électro-optique suivant l'une des revendications précédentes, caractérisé en ce qu'au moins une fente (KS) de collage, orientée parallèlement à l'axe longitudinal (Z) de la douille (2) de couplage, entre au moins un prolongement (AN) et au moins un évidement (AUS) de la zone (3) de réception de la douille (2) de couplage et du composant (8) électro-optique en ayant une largeur de fente qui permet une orientation du module (8) électro-optique en une position de couplage optique maximum.

5. Module électro-optique suivant la revendication 4, caractérisé en ce que la zone (3) de réception de la douille (2) de couplage est munie sur son bord extérieur de plusieurs prolongements en forme de tourillons (AN) et en ce que le module (8) électro-optique est muni sur son bord extérieur d'évidements (AUS), qui, à l'état assemblé, sont en alignement avec les tourillons (AN).
